# EUROPEAN PATENT SPECIFICATION

(11) **EP 0 923 302 B1**
(45) Date of publication and mention of the grant of the patent: **02.04.2003**
(21) Application number: 97937599.5
(22) Date of filing: 29.08.1997
(51) Int. Cl.: A23C 19/076

(54) **FRESH CHEESE PRODUCT AND PROCESS FOR THE MANUFACTURE THEREOF**
FRISCHKÄSE UND VERFAHREN ZU DESSEN HERSTELLUNG
FROMAGE FRAIS ET PROCEDE DE FABRICATION ASSOCIE

(30) Priority: 29.08.1996 FI 963380
(43) Date of publication of application: 23.06.1999
(73) Proprietor: Löv, Monica, 07855 Tesjoki (FI); Löv, Jeff, 07855 Tesjoki (FI)
(72) Inventor: Löv, Monica, 07855 Tesjoki (FI); Löv, Jeff, 07855 Tesjoki (FI)
(74) Representative: Karvinen, Leena Maria
(86) International application number: FI9700497
(87) International publication number: WO98008396

(56) References cited:
- WO-A-95/14389
- WO-A-96/37114
- NORDISK MEJERIINDUSTRI, Volume 4, 1981, VAMLING, GOSTA, "Ny BUKO-Fabrik i Holstebro", pages 225-227.
- FOODS AND FOOD PRODUCTION ENCYCLOPEDIA, 1982, CONSIDINE D.M. et al., "Cream Cheese", page 498.

## Description

The present invention pertains to cheese making technology and relates to a novel fresh cheese product which can be used in various ways either as such or as a raw material of food industry. The invention relates also to a process for the preparation of such a fresh cheese product.

An ordinary fresh curd cheese is made by using milk and eggs as basic raw materials, from the mixture of which the curd is coagulated using sour milk as souring agent. The coagulated curd is gathered up, salted, flavoured if appropriate, and packed into a mold.

Various processes for making fresh cheese type products have also been disclosed in the art. E.g. in US patents No. 2,558,256, 4,352,826 and 4,534,982 processes for making soft cheeses or curd are disclosed. However, all of these use acid or rennet or mixtures thereof as curdling agent, and the pH of the curd obtained is 4.6, which corresponds to the normal coagulating acidity of milk.

In WO 95/14389 a low-fat fresh cheese product and process for its manufacture is described. In the process rennet and acid are used to coagulate the curd, whereupon the pH of the curd is reduced to the value of 4.6 to 4.9.

In Nordisk Mejeriindustri, Vol. 4, 1981, pages 225-227, Vamling, Gösta, "Ny BUKO-fabrik i Holstebro", a cheese-making process is described, wherein pasteurized and homogenized cream is acidified for about 24 hours, and then heat-treated, centrifuged and homogenized. The souring agent or the pH value achieved is not mentioned, but the conditions used indicate that the coagulation occurs by the acidification.

We have now developed a novel fresh cheese product which differs from usual cheeses and which we call "cheese-creme". In the manufacture of cheese-creme either pure milk, which is preferably homogenized milk, or alternatively milk and eggs or egg white are used, from which with acidity adjustment and heat treatment curd is obtained which is further worked up by homogenization according to the process of the invention. In an especially preferred embodiment the cheese-creme of the invention is prepared using pure milk without eggs, whereby the milk is pretreated in specific process steps according to the invention, coagulated by heating, and the curd obtained is worked up by homogenization.

The essential process steps in the preferred process of the invention for the preparation of the cheese-creme are the following: As raw material milk (or cream) is used, the fat content of which is about 0.05 to about 42.0 %, depending on how high fat content the final product should have. The milk used as raw material can be homogenized. Homogenization has for its part a restrictive effect to the formation of a normal curd. In a conventional cheese making curdling as strong as possible is pursued instead. The non-fat solids content of the raw material can be between about 7.0 and about 40.0 %. The solids content has influence on the amount of the whey to be removed when the solids content of the final product is adjusted.

Depending on what kind of product is desired, homogenized or non-homogenized milk is heat treated either keeping it at about 65 to about 95 °C for about 0.5 to about 15 hours, preferably for about 1 to about 2 hours or, alternatively, heating it quickly (for 4-6 seconds) to a temperature of about 135 to 143 °C. This heavy heat treatment has a similar restrictive effect on the formation of curd than homogenization does. Using the heat treatment the casein bonds are occupied by whey proteins and membrane proteins of the fat spheres, as well as by lactose, whereupon the formation of curd is prevented. In addition, to the cheese-creme mass whey proteins can be included which are denatured in this heat treatment.

After the heat treatment the acidity of the milk is adjusted to pH value 5.7 to 6.0, preferably 5.8 ± 0.05, by adding carefully an acid or a souring agent. The acid can be any acid accepted to be used in foods, e.g. lactic or citric acid. As a souring agent sour milk can be used, which is advantageous for use in the process of the invention. By the acidity adjustment the heating stability of the casein protein is shaken, whereby milk can be coagulated simply by heating. The pH 5.7 to 6.0 is not enough to coagulate milk, and thus it is not the question of acid coagulation.

After the acidity adjustment the milk is kept at the temperature of about 70 to 95 °C, preferably 75 to 90 °C, for about 0.5 to about 6 hours, whereby casein and also part of the whey proteins are coagulated. Provided the previous steps, i.e. heat treatment and acidity adjustment are carried out carefully in a correct way, a smooth, plastic mass which is obtained is easy to be worked up further. If e.g. the heat treatment is not sufficient, the curd will be too hard and glutinous, whereby it is almost impossible to work it up. It is the same with the pH, if it is allowed to be too low, i.e. if the milk is acid coagulated, the coagulate will be hard and "dry", and it cannot be worked up using a homogenizer. By cooking the mass coagulated by heating a final product is obtained which stands subsequent heating and working up.

If desired, some whey can be removed after the coagulation, whereby the solids content of the final product will be as desired. This step for its part affects the thickness of the texture of the final product.

After getting the solids of the mass to a desired value, the mass is worked up by homogenizing at a pressure of about 50 to about 300 kp/cm², preferably over 100 kp/cm², and usually about 150 to about 200 kp/cm², and at a temperature of about 60 to about 90 °C, preferably at about 65 to about 85 °C, using e.g. a two-phase dairy homogenizer or a colloid mill. Working up itself and intensity thereof have an influence on the textural characteristics of the final product, such as thickness and smoothness. The homogenizing temperature should be >60 °C to keep the texture of the final product thick and to keep the whey from separating. When using a colloid mill the temperature should be between 60 and 85 °C. After cooling the mass also stands cold-work, as well as hot-work carried out subsequently.

The mass worked up can be packed as hot, whereby it is cooled down in its package in a cold store or in a water bath. An advantage of packing as hot is the acepticity of the operation, i.e. the hot product "sterilizes" the package. The mass is cooled down slowly in the package, which also has a thickening effect on the texture. The mass can also be cooled down rapidly in a plate-form thermal conductor down to below 10 °C, and packed only after that.

The cheese-creme containing eggs is prepared preferably by leading milk to a cheese kettle and heating it up to 88 °C, adding souring agent as well as eggs or egg white thereto. The mixture contains preferably about 80 % of milk, about 16 % of souring agent (sour milk) and about 4 % of eggs calculated from the total weight of the starting mixture. As the souring agent also e.g. lactic or citric acid can be used instead of sour milk. When the souring agent and eggs are added, the temperature decreases (to about 74 °C), because of which the mixture is reheated, until it reaches a temperature of about 84 to 85 °C. The mixture is kept at this temperature for at least about 1.5 hours, whereby a final product is obtained which is well heat-resistant.

After this the whey is decanted away and, if desired, salt and/or flavours are added into the mass. The mass is transferred via a pump to a homogenizer. Homogenization takes place at 65 to 85 °C. The mass is passed through the pressure nozzle using a pressure of over 100 kp/cm². The pressure can be between about 120 and about 300 kp/cm². Usually a pressure of 160 to 180 kp/cm² is used. The particle size of the homogeneous mass obtained varies depending of the conditions used from under 1 µm up to over 10 µm. The temperature and pressure used depend on what kind of consistency is desired for the final product. The higher pressure and temperature are used, the harder mass will be obtained.

If desired, the mass can further be pasteurized, or some preservative, preferably sorbic acid can be added thereto. When the product is packed aceptically into small cups, pasteurization or preservatives are usually not needed, but it is good to pasteurize a product which is packed to bigger batches and meant for large-scale kitchen use, or it is good to add sorbic acid thereto to guarantee its longer shelf-life.

The fat content of the milk used can vary in a similar manner as has been described above, depending on how high fat content the final product should have. If skimmed milk and egg-white are used, the product will be totally fat-free. The fat content of the final product is generally over 0.5 %, and usually between 0.5 and 60 %. The process can, however, be used to manufacture a product having the fat content of over 60 %. On the other hand the non-fat solids of the final product are generally over 11 %, usually between 11 and 40 %. However, the non-fat solids can also be over 40 %.

Homogenized cheese-creme mass can be salted to a salt concentration of e.g. about 1 to 1.5 %. To a non-salted mass sugar can be added and it can be used to prepare e.g. pudding-like sweetened dessert which is flavoured with e.g. vanilla. Suitable spices for seasoning of a salted cheese mass are e.g. herbs and garlic. The mass can also be seasoned with e.g. Emmental or Cheddar cheeses.

The cheese-creme according to the invention can be used in food preparation, as a raw material in food industry, or as such. It does not contain additives and it can be used both in cold and hot, as well as both in salty and sweet foods. The seasoned cheese-creme can be used e.g. as such as a spread on bread, and the non-seasoned cheese-creme can be used as a thickening ingredient in soups or as a cream substitute in different foods.

The following Examples illustrate the embodiments of the process of the invention for preparing cheese-creme. All percentages given above and hereafter mean percentages by weight.

### Example 1 Preparing of cheese-creme from homogenized milk

100 litres of homogenized milk, the fat content of which was 4.3 %, was placed into a cheese kettle, and the milk was heated up to 85 °C, and was kept at this temperature for 1.5 hours. pH of the milk was adjusted to 5.80 by adding 16 1 of sour milk, pH of which was 4.4. The temperature was adjusted to 85 °C, whereby the milk was heat coagulated. The mixture was further kept at the temperature of 85 °C for 1.5 hours. 81 litres of whey were removed from the kettle and the mass was transferred to a homogenizer where it was homogenized at a pressure of 150 kp/cm² and at the temperature of 80 °C. A smooth, plastic mass was obtained, the total solids of which were 24.5 %. The mass was packed as hot (75 °C) into 3 kg buckets and 150 g cups, which were transferred to a cold store, where they were allowed to cool down slowly.

### Example 2 Preparation of a pudding-like sweetened dessert flavoured by vanilla

30 litres of homogenized milk, the fat content of which was 3.5 %, was heated up to 85 °C, and kept at this temperature for 1.5 hours. Acidity was adjusted to the value of pH 5.76 by adding 5 1 of fat-free sour milk, the pH of which was 4.4. The temperature was adjusted to 85 °C, whereby heat coagulation took place. The coagulate was cooked for one further hour at 80 °C to increase the working-up ability and heating stability of the final product. The solids were adjusted by removing 25 1 of the whey, whereby the total solids of the final product were 24.35 %. Vanilla-aroma powder (1.5 g/l) mixed with 50 g of sugar was added to the hot mass. The flavoured mass was homogenized at the temperature of 75 °C at the pressure of 200 kp/cm². The product was packed at 70 °C into 150 g cups which were allowed to cool down in a cold store.

### Example 3 Preparation of cheese-creme spread seasoned with Cheddar

200 litres of fat-free milk was placed into a cheese kettle and heated up to 88 °C. 35 litres of sour milk and 7 kg of egg mass were added into the kettle. The temperature of the mixture was decreased to 74 °C. The mixture was stirred, whereby curdling took place, and the mixture was heated at the rate of about 3 °C / 10 minutes, until the temperature of 84 °C was achieved. The mixture was incubated for 1.5 hours maintaining a temperature of 84-85 °C.

The whey (about 140 1) was drained from the kettle, whereby about 100 kg of cheese mass was remained. 15 kg of Cheddar cheese was melted into 15 litres of whey, and this mixture was added into the cheese mass. The mass was homogenized by passing it through the nozzle of a homogenizer at the pressure of 160 kp/cm². The temperature of the mass in the beginning of the homogenization was about 80 °C.

The homogeneous mass obtained was packed aceptically to cups holding 250 g, and they were sealed tightly.

### Example 4 Preparation of unseasoned cheese-creme suitable for large-scale kitchen use

200 litres of milk, the fat content of which was 2.5 %, was placed into a cheese kettle and heated up to 88 °C. 35 litres of sour milk and 7 kg of egg mass were added into the kettle. The temperature of the mixture was decreased to 74 °C. The mixture was stirred, whereby curdling took place, and the mixture was heated at the rate of about 3 °C / 10 minutes, until the temperature of 84 °C was achieved. The mixture was incubated for 1.5 hours maintaining a temperature of 84-85 °C.

The whey (about 140 1) was drained from the kettle, whereby about 100 kg of cheese mass was remained. 1 kg of salt was added into this mass, it was stirred and homogenized by passing it through the nozzle of a homogenizer at the pressure of 180 kp/cm². The temperature of the mass in the beginning of the homogenization was about 85 °C.

2 g of sorbic acid was added into the mass, and it was packed aceptically to large-scale kitchen packages of 5 kg.

## Claims

1. A process for the preparation of a fresh cheese product, **characterized in that** milk is heat treated by keeping it at about 65 - to about 95 °C for about 0.5 to about 15 hours, or by heating it to 135-143 °C for 4-6 seconds, pH of the heat treated milk is adjusted to the value of 5.7 - 6.0, the mixture obtained is heated to about 70 - about 95 °C, whereby coagulation takes place; the coagulated mass is maintained at the temperature achieved for about 0.5 to about 6 hours, the mass is homogenized at the pressure of about 50 to about 300 kp/cm² and at a temperature of about 60 to about 90 °C, and cooled.

2. The process according to claim 1, **characterized in that** the milk used as raw material is homogenized milk.

3. The process according to claim 1 or 2, **characterized in that** the fat content of the milk used as raw material is about 0.05 to about 42.0 %.

4. The process according to any one of claims 1-3, **characterized in that** the non-fat solids of the milk used as raw material are about 7.0 to about 40.0 %.

5. The process according to any one of claims 1-4, **characterized in that** the milk is heat treated by keeping it at a temperature of 85 to 95 °C for 1.5 hours.

6. The process according to claim 1, **characterized in that** pH is adjusted to the value of 5.8 ± 0.05.

7. The process according to claim 6, **characterized in that** lactic acid, citric acid or sour milk is used to adjust the acidity.

8. The process according to claim 1, **characterized in that** the coagulated mass is kept at 75 to 90 °C for 1.5 hours.

9. The process according to claim 1, **characterized in that** before homogenization the solids content of the coagulated mass is adjusted to the desired value by removing whey.

10. The process according to claim 1, **characterized in that** to the milk heated to about 85 - about 95 °C about 4 % of eggs or egg white, and about 16 % of sour milk, calculated from the total weight of the mixture, are added.

11. The process according to any one of claims 1-10, **characterized in that** the mass is seasoned before or after homogenization, if so desired.

12. A fresh cheese product obtainable according to a process as defined in any one of claims 1-11.

13. The fresh cheese product according to claim 12, **characterized in that** its fat content is over 0.5 % and non-fat solids over 11 %.

## Patentansprüche

1. Verfahren zur Herstellung eines Frischkäseprodukts, **dadurch gekennzeichnet, dass** Milch durch Halten bei etwa 65 bis etwa 95 °C über etwa 0,5 bis etwa 15 Stunden oder durch Erwärmen auf 135 bis 143 °C über 4 bis 6 Sekunden wärmebehandelt wird, der pH der wärmebehandelten Milch auf einen Wert von 5,7 bis 6,0 eingestellt wird, das erhaltene Gemisch auf etwa 70 bis etwa 95 °C erwärmt wird, wobei Gerinnung erfolgt; die geronnene Masse über etwa 0,5 bis etwa 6 Stunden auf der erreichten Temperatur gehalten wird, die Masse bei einem Druck von etwa 50 bis etwa 300 kp/cm² und einer Temperatur von etwa 60 bis etwa 90 °C homogenisiert und abgekühlt wird.

2. Verfahren gemäß Anspruch 1, **dadurch gekennzeichnet, dass** die als Rohmaterial verwendete Milch homogenisierte Milch ist.

3. Verfahren gemäß Anspruch 1 oder 2, **dadurch gekennzeichnet, dass** der Fettgehalt der als Rohmaterial verwendeten Milch etwa 0,05 bis etwa 42,0 % beträgt.

4. Verfahren gemäß einem der Ansprüche 1 bis 3, **dadurch gekennzeichnet, dass** die nicht fettartigen Feststoffe der als Rohmaterial verwendeten Milch etwa 7,0 bis etwa 40,0 % betragen.

5. Verfahren gemäß einem der Ansprüche 1 bis 4, **dadurch gekennzeichnet, dass** die Milch durch Halten bei einer Temperatur von 85 bis 95 °C über 1,5 Stunden wärmebehandelt wird.

6. Verfahren gemäß Anspruch 1, **dadurch gekennzeichnet, dass** der pH auf einen Wert von 5,8 ± 0,05 eingestellt wird.

7. Verfahren gemäß Anspruch 6, **dadurch gekennzeichnet, dass** Milchsäure, Zitronensäure oder saure Milch zur Einstellung des Säuregehalts verwendet wird.

8. Verfahren gemäß Anspruch 1, **dadurch gekennzeichnet, dass** die geronnene Masse bei 75 bis 90 °C über 1,5 Stunden aufbewahrt wird.

9. Verfahren gemäß Anspruch 1, **dadurch gekennzeichnet, dass** vor dem Homogenisieren der Feststoffgehalt der geronnenen Masse durch Entfernen von Molke auf den gewünschten Wert eingestellt wird.

10. Verfahren gemäß Anspruch 1, **dadurch gekennzeichnet, dass** zu der auf etwa 85 bis etwa 95 °C erwärmten Milch etwa 4 % Eier oder Eiweiß und etwa 16 % saure Milch, bezogen auf das Gesamtgewicht des Gemisches, zugegeben werden.

11. Verfahren gemäß einem der Ansprüche 1 bis 10, **dadurch gekennzeichnet, dass** die Masse vor oder nach dem Homogenisieren, falls erwünscht, gewürzt wird.

12. Frischkäseprodukt, erhältlich durch ein Verfahren nach einem der Ansprüche 1 bis 11.

13. Frischkäseprodukt gemäß Anspruch 12, **dadurch gekennzeichnet, dass** sein Fettgehalt über 0,5 % und sein Gehalt an nicht fettartigen Feststoffen über 11 % beträgt.

## Revendications

1. Procédé de fabrication d'un fromage frais, **caractérisé en ce que** le lait est traité à chaud par son maintien à une température comprise entre 65°C environ et 95°C environ pendant 0,5 heure environ à 15 heures environ, ou par son chauffage à une température de 135°C à 143°C pendant 4 à 6 secondes, le pH du lait traité à chaud est ajusté à la valeur de 5,7 à 6,0, le mélange obtenu est chauffé à une température de 70°C environ à 95°C environ, de sorte qu'une coagulation se produit, la masse coagulée est maintenue à la température atteinte pendant une durée de 0,5 heure environ à 6 heures environ, la masse est homogénéisée sous une pression de 50 kp/cm² environ à 300 kp/cm² environ et à une température de 60°C environ à 90°C environ, et elle est refroidie.

2. Procédé selon la revendication 1, **caractérisé en ce que** le lait utilisé comme matière première est du lait homogénéisé.

3. Procédé selon la revendication 1 ou 2, **caractérisé en ce que** la teneur en matières grasses du lait utilisé comme matière première est de 0,05% environ à 42,0% environ.

4. Procédé selon une quelconque des revendications 1 à 3, **caractérisé en ce que** la teneur en matières solides non grasses du lait utilisé comme matière première est de 7,0% environ à 40,0% environ.

5. Procédé selon une quelconque des revendications 1 à 4, **caractérisé en ce que** le lait est traité à chaud par son maintien à une température de 85°C à 95°C pendant 1,5 heure .

6. Procédé selon la revendication 1, **caractérisé en ce que** le pH est ajusté à la valeur de 5,8 ± 0,05.

7. Procédé selon la revendication 6, **caractérisé en ce qu'**on utilise de l'acide lactique, de l'acide citrique ou du lait acidifié, pour ajuster l'acidité.

8. Procédé selon la revendication 1, **caractérisé en ce que** la masse coagulée est maintenue à une température de 75°C à 90°C pendant 1,5 heure.

9. Procédé selon la revendication 1, **caractérisé en ce que**, avant l'homogénéisation, on ajuste la teneur en matières solides de la masse coagulée à la valeur désirée par élimination du petit lait.

10. Procédé selon la revendication 1, **caractérisé en ce qu'**on ajoute, au lait chauffé à une température de 85°C environ à 95°C environ, 4% environ d'oeufs ou de blanc d'oeuf et 16% environ de lait acidifié, calculés par rapport au poids total du mélange.

11. Procédé selon une quelconque des revendications 1 à 10, **caractérisé en ce qu'**on assaisonne la masse avant ou après homogénéisation si on le désire.

12. Fromage frais qui peut être obtenu selon un procédé comme défini dans une quelconque des revendications 1 à 11.

13. Fromage frais selon la revendication 12, **caractérisé en ce que** sa teneur en matières grasses est supérieure à 0,5% et sa teneur en matières solides non grasses est supérieure à 11%.
